# EUROPÄISCHE PATENTSCHRIFT

(11) **EP 2 088 831 B1**
(45) Veröffentlichungstag und Bekanntmachung des Hinweises auf die Patenterteilung: **14.08.2013**
(21) Anmeldenummer: 08002317.9
(22) Anmeldetag: 08.02.2008
(51) Int. Cl.: H04W 84/00

(54) **Verfahren zur Lokalisierung von Personen**
Method for locating persons
Procédé destiné à la localisation de personnes

(43) Veröffentlichungstag der Anmeldung: 12.08.2009
(73) Patentinhaber: SkiData AG, 5083 Grödig/Salzburg (AT)
(72) Erfinder: Pamminger, Herbert, 4814 Neukirchen (AT); Ponert, Gregor, 5020 Salzburg (AT); Fox, Dirk, 83483 Bischofswiesen (DE); Lippert, Johannes, 5360 St. Wolfgang (AT)
(74) Vertreter: Karakatsanis, Georgios

(56) Entgegenhaltungen:
- WO-A-2004/054304
- WO-A-2004/062159
- WO-A-2005/032176
- WO-A-2006/086398

## Beschreibung

Die vorliegende Erfindung bezieht sich auf ein Verfahren zur Lokalisierung von Personen gemäß dem Oberbegriff des Patentanspruchs 1.

Aus dem Stand der Technik ist bekannt, RFID-Technologie zur Bereitstellung von Informationen auf einem mobilen Kommunikationsgerät, beispielsweise auf einem Mobiltelefon zu verwenden. Ferner ist bekannt, durch eine berührungslose RFID-Interaktion zwischen einem Smartposter und einem RFID-fähigen Gerät Informationen an das RFID-fähige Gerät zu übertragen.

In der Regel wird hierbei als RFID-Technologie NFC - Technologie eingesetzt (NFC - Technologie steht für Near-Field-Communication - Technologie, die bekannterweise eine auf RFID-Funktechnologie basierende Funktechnologie für kurze Distanzen ist).
Die WO 2004/062159 A2 offenbart ein auf NFC basierendes Kommunikationssystem, in dem eine Vielzahl von Objekten von benachbarten Transceivern ausgelesen werden. Darüber hinaus beschreibt die WO 2004/054304 A1 ein Verfahren zum Aufzeichnen der Positionsdaten eines tragbaren Geräts, wobei jedem Gerät eine eigene ID-Kennung zugeordnet ist, die in einer Datenbank mit den jeweiligen Positionsdaten, Datum und Zeit abgespeichert wird.

Der vorliegenden Erfindung liegt die Aufgabe zugrunde, ein Verfahren zur Lokalisierung von Personen zur Verfügung zu stellen, durch dessen Durchführung die Lokalisierung auf einfache Weise ermöglicht wird.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird im Rahmen einer ersten Variante des erfindungsgemäßen Verfahrens vorgeschlagen, dass zumindest ein tragbares Gerät bzw. Mobiltelefon zumindest einem personenbezogenen maschinenlesbaren und/oder RFID-lesbaren und/oder WLAN-fähigen Gegenstand zugeordnet wird und/oder umgekehrt, wobei diese Zuordnung in einem dem Gebiet zugeordneten Server, in dem die Lokalisierung aktiviert werden soll, gespeichert wird, wobei das zumindest eine tragbare Gerät bzw. Mobiltelefon vorzugsweise über die Mobiltelefonnummer und/oder die eine Seriennummer des Mobiltelefons bzw. des tragbaren Gerätes und/oder der SIM-Karte und/oder eines Sicherheitsspeichers und/oder des Speichermoduls des tragbaren Gerätes bzw. des Mobiltelefons identifiziert wird und wobei der zumindest eine personenbezogene maschinenlesbare und/oder RFID-lesbare und/oder WLAN-fähige Gegenstand vorzugsweise anhand zumindest einer diesem Gegenstand eindeutig zugeordneten Nummer identifiziert wird.

Als personenbezogener Gegenstand kann eine Eintrittskarte, ein RFID- Aktiv- oder Passivdatenträger oder ein RFID- bzw. NFC- fähiges tragbares Gerät bzw. Mobiltelefon dienen. Ferner kann vorgesehen sein, dass als personenbezogener Gegenstand ein WLAN - fähiges tragbares Gerät bzw. Mobiltelefon dient.

Das tragbare Gerät im Sinne der Erfindung kann beispielsweise ein Notebook oder ein PDA sein, wobei es vorzugsweise auch eine GSM-basierte Kommunikation ermöglicht bzw. die Funktionalität eines Mobiltelefons aufweist.

Gemäß der Erfindung wird zur Lokalisierung einer Person, der ein personenbezogener maschinenlesbarer und/oder RFID-lesbarer und/oder WLAN-fähiger Gegenstand zugeordnet ist, anhand einer Verbindung des tragbaren Gerätes bzw. Mobiltelefons mit dem Server die Information abgerufen, wo und optional wann der personenbezogene maschinenlesbare und/oder RFID-lesbare und/oder WLAN-fähige Gegenstand zuletzt erfasst worden ist.

Für den Fall, dass dem tragbaren Gerät bzw. dem Mobiltelefon mehrere personenbezogene maschinenlesbare und/oder RFID-lesbare und/oder WLAN-fähige Gegenstände zugeordnet sind, kann nach der Herstellung der Verbindung der Benutzer des tragbaren Gerätes bzw. des Mobiltelefons menügesteuert die Gegenstände auswählen, deren Lokalisierung erwünscht ist oder es werden Informationen bezüglich sämtlicher Gegenstände angezeigt.

Die Verbindung des tragbaren Gerätes bzw. Mobiltelefons mit dem Server kann mittels eines Mobilfunknetzes, mittels WLAN, Bluetooth ® oder über eine andere berührungslose Verbindungstechnologie erfolgen. Für den Fall eines RFID- bzw. NFC-fähigen tragbaren Gerätes bzw. Mobiltelefons kann die Verbindung durch Aktivierung eines mittels einer RFID- bzw. NFC - Interaktion von einem RFID- bzw. NFC - Label an das tragbare Gerät bzw. Mobiltelefon übermittelten Links hergestellt werden.

Es kann auch vorgesehen sein, dass durch eine RFID- bzw. NFC - Interaktion zwischen dem tragbaren Gerät bzw. dem Mobiltelefon und einer mit dem Server verbundenen RFID- bzw. NFC-fähigen Einrichtung auf dem Display der Einrichtung die Information angezeigt wird, wo und optional wann der personenbezogene maschinenlesbare und/oder RFID-lesbare und/oder WLAN-fähige Gegenstand zuletzt erfasst worden ist. Für den Fall, dass dem tragbaren Gerät bzw. dem Mobiltelefon mehrere personenbezogene maschinenlesbare und/oder RFID-lesbare und/oder WLAN-fähige Gegenstände zugeordnet sind, kann der Benutzer des tragbaren Gerätes bzw. des Mobiltelefons menügesteuert die Gegenstände auswählen, deren Lokalisierung erwünscht ist oder es werden Informationen bezüglich sämtlicher Gegenstände angezeigt.

Gemäß einer vorteilhaften Weiterbildung der Erfindung kann vorgesehen sein, dass die personenbezogenen maschinenlesbaren und/oder RFID-lesbaren Gegenstände an mit dem Server verbundenen Meldestellen umfassend eine Leseeinrichtung für die Gegenstände anhand der zumindest einen diesem Gegenstand eineindeutig zugeordneten Nummer erfasst werden, wobei nach der Erfassung an das einem personenbezogenen maschinenlesbaren und/oder RFID-lesbaren Gegenstand zugeordnete tragbare Gerät bzw. Mobiltelefon optional eine Benachrichtigung, vorzugsweise eine SMS übermittelt wird, welche die Information des Ortes und optional der Zeit der Erfassung enthält.

Für den Fall, dass einem personenbezogenen maschinenlesbaren und/oder RFID-lesbaren Gegenstand mehrere tragbare Geräte bzw. Mobiltelefone zugeordnet sind kann der Benutzer des personenbezogenen maschinenlesbaren und/oder RFID-lesbaren Gegenstandes menügesteuert die tragbaren Geräte bzw. Mobiltelefone auswählen, an die die Benachrichtigung übermittelt wird. Alternativ wird die Benachrichtigung an sämtliche tragbare Geräte bzw. Mobiltelefone übermittelt.

Das erfindungsgemäße Verfahren kann beispielsweise in einem Skigebiet angewandt werden, wobei als personenbezogene maschinenlesbare und/oder RFID-lesbare Gegenstände die Skipass-Keycards dienen. Hierbei kann bei der Bezahlung der Keycard an der Kasse das zumindest eine tragbare Gerät bzw. Mobiltelefon über die Mobiltelefonnummer und/oder die eine Seriennummer des Mobiltelefons bzw. des tragbaren Gerätes und/oder der SIM-Karte und/oder eines Sicherheitsspeichers und/oder des Speichermoduls des tragbaren Gerätes bzw. des Mobiltelefons erfasst und in einem dem Skigebiet zugeordneten Server mit der Seriennummer der Keycard gepairt werden.

Das Pairing zwischen dem tragbaren Gerät bzw. dem Mobiltelefon und der Keycard kann auch dadurch erzielt werden, dass nach der Herstellung einer Verbindung zwischen dem Mobiltelefon und dem Server die Seriennummer der zumindest einen Keycard manuell eingegeben wird, wobei bei aktiver Verbindung die Mobiltelefonnummer und/oder die eine Seriennummer des Mobiltelefons bzw. des tragbaren Gerätes und/oder der SIM-Karte und/oder eines Sicherheitsspeichers und/oder des Speichermoduls des tragbaren Gerätes bzw. des Mobiltelefons an den Server übermittelt wird.

Alternativ zur manuellen Eingabe der Seriennummer der Keycard kann die Eingabe mittels einer RFID- bzw. NFC - Interaktion zwischen dem tragbaren Gerät bzw. dem Mobiltelefon des Benutzers und der RFID- bzw. NFC- lesbaren Keycard erfolgen.

Bei den beidem letzten Varianten kann das Pairing in vorteilhafter Weise nach dem Erwerb der Keycards erfolgen, was dazu führt, dass durch die Durchführung des erfindungsgemäßen Verfahrens keine langen Schlangen an den Kassen entstehen.

Gemäß der Erfindung kann durch eine Verbindung des tragbaren Gerätes bzw. des Mobiltelefons mit dem Server die Information abgerufen werden, wann die Keycard zuletzt an welchem Skilift verwendet worden ist.

Alternativ zur separaten Keycard kann als personenbezogener Gegenstand im Sinne der Erfindung auch ein RFID- bzw. NFC - fähiges tragbares Gerät bzw. Mobiltelefon dienen, wobei der Skipass enthaltend eine Seriennummer in elektronischer Form im tragbaren Gerät bzw. im Mobiltelefon gespeichert ist und mittels einer RFID- bzw. NFC - Interaktion von den Zutrittskontrolleinrichtungen im Skigebiet ausgelesen wird.

Des weiteren kann das hier vorgestellte Verfahren auch bei einer Messe angewandt werden, wobei die Messeeintrittskarten als personenbezogene maschinenlesbare und/oder RFID-lesbare Gegenstände dienen. Das Pairing zwischen dem tragbaren Gerät bzw. dem Mobiltelefon und der Messeeintrittskarte kann beispielsweise bei der Bezahlung an der Kasse oder, wie bereits für den Fall von Skipass - Keycards erläutert, nach dem Erwerb der Messeeintrittskarte manuell oder mittels einer RFID- bzw. NFC - Interaktion zwischen dem tragbaren Gerät bzw. dem Mobiltelefon des Benutzers und einer RFID- bzw. NFC- lesbaren Messeeintrittskarte durchgeführt werden.

Hierbei sind an Messeständen Meldestellen zur Erfassung der Messeintrittskarten vorgesehen, umfassend eine mit einem der Messe zugeordneten Server verbundene Leseeinrichtung für die Messeeintrittskarten, Auf diese Weise kann der Benutzer des tragbaren Gerätes bzw. Mobiltelefons die Information abrufen, wann die Messeeintrittskarte an welchem Messestand zuletzt erfasst worden ist. Zusätzlich oder alternativ zu den Meldestellen können zur Erfassung der Messeintrittskarten auf dem Messegelände, beispielsweise zwischen zwei Messehallen, Übertrittsgates vorgesehen sein, welche eine mit einem der Messe zugeordneten Server verbundene Leseeinrichtung für die Messeeintrittskarten aufweisen.

Alternativ zu der Messeeintrittskarte kann als personenbezogener RFID-lesbarer Gegenstand ein RFID- bzw. NFC- fähiges tragbares Gerät bzw. Mobiltelefon dienen, wobei zu diesem Zweck das tragbare Gerät bzw. das Mobiltelefon anhand einer RFID- bzw. NFC - Interaktion mit einer RFID- bzw. NFC-fähigen Meldestelle an einem Messestand bzw. mit einem Übertrittsgate erfasst wird. Optional kann die Messeeintrittskarte enthaltend eine Seriennummer auf dem tragbaren Gerät bzw. Mobiltelefon in elektronischer Form gespeichert sein, wobei die Erfassung der elektronischen Messeeintrittskarte analog zu der bereits beschriebenen Erfassung einer "herkömmlichen" Messeeintrittskarte erfolgt.

In vorteilhafter Weise kann vorgesehen sein, dass mittels der RFID- bzw. NFC - Interaktion eine Visitenkarte des Benutzers des tragbaren Gerätes bzw. des Mobiltelefons in elektronischer Form an die Meldestelle des Messestandes übermittelt wird. Hierbei kann der Benutzer gemäß einer Weiterbildung der Erfindung menügesteuert weitere Details angeben, Prospekte anfordern oder einer telefonischen Kontaktaufnahme zustimmen.

Für den Fall von als personenbezogene Gegenstände dienenden WLAN-fähigen tragbaren Geräten bzw. Mobiltelefonen, kann gemäß der Erfindung vorgesehen sein, dass die Lokalisierung dadurch erfolgt, dass als Position des Gegenstandes die Position des WLAN - Senders angegeben wird, mit dem das tragbare Gerät bzw. Mobiltelefon zuletzt verbunden war bzw. verbunden ist.

Alternativ dazu kann vorgesehen sein, dass die Position des tragbaren Gerätes bzw. Mobiltelefons mittels einer Peilung anhand der vom tragbaren Gerät bzw. Mobiltelefon empfangenen Signalstärke von zumindest zwei WLAN - Sendern ermittelt wird, wobei zu diesem Zweck das tragbare Gerät bzw. Mobiltelefon die ermittelte Position mittels einer WLAN-Verbindung an den Server übermittelt. Diese Information kann dann von anderen Benutzern, wie bereits beschrieben, abgerufen werden.

Hierbei können gemäß einer vorteilhaften Ausgestaltung der Erfindung im Gebiet, in dem die Lokalisierung aktiviert werden soll, beispielsweise in einem Skigebiet, auf einem dem Gebiet zugeordneten Server Gruppen gebildet werden, welche die tragbaren Geräte bzw. die Mobiltelefone enthalten, die zu einer Gruppe von Benutzern gehören. Zur Lokalisierung einer Person aus der Gruppe wird anhand einer Verbindung eines tragbaren Gerätes bzw. Mobiltelefons mit dem Server die Information abgerufen, wo und optional wann das WLAN-fähige tragbare Gerät bzw. Mobiltelefon von einem WLAN - Sender zuletzt erfasst worden ist. Diese Vorgehensweise kann auf für den Fall einer Lokalisierung anhand der Erfassung der tragbaren Geräte bzw. Mobiltelefone als Eintrittskarten bzw. Keycards angewandt werden.

Zur Bildung einer Gruppe wird mittels eines ersten tragbaren Gerätes bzw. Mobiltelefons oder mittels eines herkömmlichen Computers eine Internetverbindung zum Server, beispielsweise zu einem einem Skigebiet zugeordneten Server, hergestellt, wobei menügesteuert eine Gruppe definiert wird und die Mitglieder der Gruppe über die Mobiltelefonnummer und/oder eine Seriennummer des Mobiltelefons bzw. des tragbaren Gerätes und/oder der SIM-Karte und/oder eines Sicherheitsspeichers und/oder des Speichermoduls des tragbaren Gerätes bzw. des Mobiltelefons des jeweiligen Mitglieds definiert werden. Vorzugsweise erhält die Gruppe einen Namen bzw. eine Nummer und ein Passwort bzw. eine PIN, wobei zum nachträglichen Beitritt eines Mitglieds die Angabe des Namens bzw. der Gruppennummer sowie des Passworts bzw. der PIN erforderlich ist.

Gemäß der Erfindung kann eine Person der Gruppe nachträglich beitreten, indem sie mittels einer Verbindung zum Server den Gruppennamen bzw. die Gruppennummer, ein Passwort bzw. eine PIN sowie die Mobiltelefonnummer und/oder eine Seriennummer des Mobiltelefons bzw. des tragbaren Gerätes und/oder der SIM-Karte und/oder eines Sicherheitsspeichers und/oder des Speichermoduls des tragbaren Gerätes bzw. des Mobiltelefons eingibt. Gemäß einer bevorzugten Ausführungsform der Erfindung kann dies mittels einer SMS enthaltend diese erforderlichen Daten an den dem Gebiet zugeordneten Server erfolgen.

Gemäß einer weiteren Ausgestaltung der Erfindung können als personenbezogene Gegenstände RFID- Aktivdatenträger dienen. Hierbei werden die Aktivdatenträger anhand einer Seriennummer mit zumindest einem tragbaren Gerät bzw. Mobiltelefon in einem dem Gebiet zugeordneten Server, in dem die Lokalisierung aktiviert werden soll, gepairt. Hierbei kann das Pairing dadurch erfolgen, dass nach der Herstellung einer Verbindung zwischen einem tragbaren Gerät bzw. einem Mobiltelefon und einem Server die Seriennummer des Aktivdatenträgers manuell oder mittels einer RFID- bzw. NFC - Interaktion zwischen dem tragbaren Gerät bzw. dem Mobiltelefon des Benutzers und dem Aktivdatenträger eingegeben wird.

Die Lokalisierung erfolgt dadurch, dass die Aktivdatenträger von RFID-fähigen Einrichtungen erfasst werden, wobei der Benutzer des tragbaren Gerätes bzw. des Mobiltelefons anhand einer bereits beschriebenen Verbindung des tragbaren Gerätes bzw. Mobiltelefons mit dem Server die Information abrufen kann, wo und optional wann der personenbezogene RFID - Aktivdatenträger zuletzt erfasst worden ist.

Gemäß einer vorteilhaften Weiterbildung der Erfindung kann vorgesehen sein, dass der Benutzer des tragbaren Gerätes bzw. Mobiltelefons benachrichtigt wird, beispielsweise über eine SMS, wenn die Person, der der Aktivdatenträger zugeordnet ist, das Gebiet, in dem die Lokalisierung erfolgen soll, verlässt bzw. in das Gebiet, z.B. in eine Skihütte, eintritt. Zu diesem Zweck wird die Person beim Verlassen des Gebietes bzw. beim Eintreten in das Gebiet anhand des Aktivdatenträgers von einer geeigneten Einrichtung, beispielsweise von einem Exit-Reader erfasst. Des weiteren kann vorgesehen sein, dass ein Alarm ausgelöst wird. Auf diese Weise kann beispielsweise verhindert werden, dass ein Kind ein Kaufhaus oder einen Freizeitpark unbeaufsichtigt verlässt.

## Patentansprüche

1. Verfahren zur Lokalisierung von Personen, **dadurch gekennzeichnet, dass** zumindest ein tragbares Gerät bzw. Mobiltelefon zumindest einem personenbezogenen maschinenlesbaren und/oder RFID-lesbaren und/oder WLAN-fähigen Gegenstand zugeordnet wird und/oder umgekehrt, wobei diese Zuordnung in einem einem Gebiet. zugeordneten Server, in dem die Lokalisierung aktiviert werden soll, gespeichert wird, wobei zur Lokalisierung einer Person, der ein personenbezogener maschinenlesbarer und/oder RFID-lesbarer und/oder WLAN-fähiger Gegenstand zugeordnet ist, anhand einer Verbindung des tragbaren Gerätes bzw. Mobiltelefons mit dem Server die Information abgerufen wird, wo und optional wann der personenbezogene maschinenlesbare und/oder RFID-lesbare und/oder WLAN-fähige Gegenstand zuletzt erfasst worden ist und wobei als personenbezogener Gegenstand eine Eintrittskarte, oder ein RFID- bzw. NFC- fähiges oder ein WLAN - fähiges tragbares Gerät bzw. Mobiltelefon dient.

2. Verfahren zur Lokalisierung von Personen, nach Anspruch 1, **dadurch gekennzeichnet, dass** die Verbindung des tragbaren Gerätes bzw. Mobiltelefons zu dem Server mittels eines Mobilfunknetzes, mittels WLAN, Bluetooth ® oder über eine andere berührungslose Verbindungstechnologie erfolgt, wobei für den Fall eines RFID- bzw. NFC-fähigen tragbaren Gerätes bzw. Mobiltelefons die Verbindung durch Aktivierung eines mittels einer RFID- bzw. NFC - Interaktion von einem RFID- bzw. NFC - Label an das tragbare Gerät bzw. Mobiltelefon übermittelten Links hergestellt werden kann.

3. Verfahren zur Lokalisierung von Personen, nach Anspruch 1 oder 2, **dadurch gekennzeichnet, dass** die Lokalisierung zusätzlich dadurch erfolgt, dass anhand einer RFID- bzw. NFC - Interaktion zwischen dem tragbaren Gerät bzw. dem Mobiltelefon und einer mit dem Server verbundenen RFID- bzw. NFC-fähigen Einrichtung auf dem Display der Einrichtung die Information angezeigt wird, wo und optional wann der personenbezogene maschinenlesbare und/oder RFID-lesbare und/oder WLAN-fähige Gegenstand zuletzt erfasst worden ist.

4. Verfahren zur Lokalisierung von Personen, nach Anspruch 1, 2 oder 3, **dadurch gekennzeichnet, dass** die Lokalisierung zusätzlich dadurch erfolgt, dass die personenbezogenen maschinenlesbaren und/oder RFID-lesbaren Gegenstände an mit dem Server verbundenen Meldestellen umfassend eine Leseeinrichtung für die Gegenstände erfasst werden, wobei nach der Erfassung an das einem personenbezogenen maschinenlesbaren und/oder RFID-lesbaren Gegenstand zugeordnete tragbare Gerät bzw. Mobiltelefon optional eine Benachrichtigung übermittelt wird, welche die Information des Ortes und optional der Zeit der Erfassung enthält.

5. Verfahren zur Lokalisierung von Personen, nach Anspruch 1, 2, 3 oder 4, **dadurch gekennzeichnet, dass** das zumindest eine tragbare Gerät bzw. Mobiltelefon über die Mobiltelefonnummer und/oder die eine Seriennummer des Mobiltelefons bzw. des tragbaren Gerätes und/oder der SIM-Karte und/oder eines Sicherheitsspeichers und/oder des Speichermoduls des tragbaren Gerätes bzw. des Mobiltelefons identifiziert wird, wobei der zumindest eine personenbezogene maschinenlesbare und/oder RFID-lesbare und/oder WLAN-fähige Gegenstand anhand zumindest einer diesem Gegenstand eindeutig zugeordneten Nummer identifiziert wird.

6. Verfahren zur Lokalisierung von Personen, nach einem der vorangehenden Ansprüche, **dadurch gekennzeichnet, dass** für den Fall, dass dem tragbaren Gerät bzw. dem Mobiltelefon mehrere personenbezogene maschinenlesbare und/oder RFID-lesbare und/oder WLAN-fähige Gegenstände zugeordnet sind, der Benutzer des tragbaren Gerätes bzw. des Mobiltelefons menügesteuert die Gegenstände auswählen kann, deren Lokalisierung erwünscht ist.

7. Verfahren zur Lokalisierung von Personen, nach einem der vorangehenden Ansprüche, **dadurch gekennzeichnet, dass** bei der Lokalisierung von Personen in einem Skigebiet als personenbezogene maschinenlesbare und/oder RFID-lesbare Gegenstände die Skipass-Keycards dienen, wobei bei der Bezahlung der Keycard an der Kasse das zumindest eine tragbare Gerät bzw. Mobiltelefon über die Mobiltelefonnummer und/oder die eine Seriennummer des Mobiltelefons bzw. des tragbaren Gerätes und/oder der SIM-Karte und/oder eines Sicherheitsspeichers und/oder des Speichermoduls des tragbaren Gerätes bzw. des Mobiltelefons erfasst und in einem dem Skigebiet zugeordneten Server mit der Seriennummer der Keycard gepairt wird, wobei durch eine Verbindung des tragbaren Gerätes bzw. des Mobiltelefons mit dem Server die Information abgerufen werden kann, wann die Keycard zuletzt an welchem Skilift verwendet worden ist.

8. Verfahren zur Lokalisierung von Personen, nach einem der vorangehenden Ansprüche 1 bis 6, **dadurch gekennzeichnet, dass** bei der Lokalisierung von Personen in einem Skigebiet als personenbezogene maschinenlesbare und/oder RFID-lesbare Gegenstände die Skipass-Keycards dienen, wobei das Pairing zwischen dem tragbaren Gerät bzw. dem Mobiltelefon und der Keycard dadurch erzielt wird, dass nach der Herstellung einer Verbindung zwischen dem Mobiltelefon und einem dem Skigebiet zugeordneten Server die Seriennummer der zumindest einen Keycard manuell oder mittels einer RFID- bzw. NFC - Interaktion zwischen dem tragbaren Gerät bzw. dem Mobiltelefon des Benutzers und der RFID- bzw. NFClesbaren Keycard eingegeben wird, wobei bei aktiver Verbindung die Mobiltelefonnummer und/oder die eine Seriennummer des Mobiltelefons bzw. des tragbaren Gerätes und/oder der SIM-Karte und/oder eines Sicherheitsspeichers und/oder des Speichermoduls des tragbaren Gerätes bzw. des Mobiltelefons an den Server übermittelt wird, wobei durch eine Verbindung des tragbaren Gerätes bzw. des Mobiltelefons mit dem Server die Information abgerufen werden kann, wann die Keycard zuletzt an welchem Skilift verwendet worden ist.

9. Verfahren zur Lokalisierung von Personen, nach einem der vorangehenden Ansprüche 7 oder 8, **dadurch gekennzeichnet, dass** bei der Lokalisierung von Personen in einem Skigebiet als personenbezogener RFID-lesbarer Gegenstand ein RFID- bzw. NFC - fähiges tragbares Gerät bzw. Mobiltelefon dient, wobei der Skipass enthaltend eine Seriennummer in elektronischer Form im tragbaren Gerät bzw. im Mobiltelefon gespeichert ist und mittels einer RFID- bzw. NFC - Interaktion von den Zutrittskontrolleinrichtungen im Skigebiet ausgelesen wird.

10. Verfahren zur Lokalisierung von Personen, nach einem der vorangehenden Ansprüche 1 bis 6, **dadurch gekennzeichnet, dass** bei der Lokalisierung von Personen auf einer Messe als personenbezogene maschinenlesbare und/oder RFID-lesbare Gegenstände die Messeeintrittskarten dienen, bei der Bezahlung der Messeeintrittskarte an der Kasse das zumindest eine tragbare Gerät bzw. Mobiltelefon über die Mobiltelefonnummer und/oder die eine Seriennummer des Mobiltelefons bzw. des tragbaren Gerätes und/oder der SIM-Karte und/oder eines Sicherheitsspeichers und/oder des Speichermoduls des tragbaren Gerätes bzw. des Mobiltelefons erfasst und in einem der Messe zugeordneten Server mit der Seriennummer der Messeeintrittskarte gepairt wird, wobei an Messeständen Meldestellen und/oder auf dem Messegelände Übertrittsgates zur Erfassung der Messeintrittskarten vorgesehen sind, umfassend eine mit einem der Messe zugeordneten Server verbundene Leseeinrichtung für die Messeeintrittskarten, wobei durch eine Verbindung des tragbaren Gerätes bzw. des Mobiltelefons mit dem Server.die Information abgerufen werden kann, wann die Messeeintrittskarte zuletzt an welchem Messestand erfasst worden ist.

11. Verfahren zur Lokalisierung von Personen, nach einem der vorangehenden Ansprüche 1 bis 6, **dadurch gekennzeichnet, dass** bei der Lokalisierung von Personen auf einer Messe als personenbezogene maschinenlesbare und/oder RFID-lesbare Gegenstände die Messeeintrittskarten dienen, wobei das Pairing zwischen dem tragbaren Gerät bzw. dem Mobiltelefon und der Messeeintrittskarte dadurch erzielt wird, dass nach der Herstellung einer Verbindung zwischen dem Mobiltelefon und einem der Messe zugeordneten Server die Seriennummer der zumindest einen Keycard manuell oder mittels einer RFID- bzw. NFC - Interaktion zwischen dem tragbaren Gerät bzw. dem Mobiltelefon des Benutzers und der RFID- bzw. NFC-lesbaren Messeeintrittskarte eingegeben wird, wobei bei aktiver Verbindung die Mobiltelefonnummer und/oder die eine Seriennummer des Mobiltelefons bzw. des tragbaren Gerätes und/oder der SIM-Karte und/oder eines Sicherheitsspeichers und/oder des Speichermoduls des tragbaren Gerätes bzw. des Mobiltelefons an den Server übermittelt wird, wobei an Messeständen Meldestellen und/oder auf dem Messegelände Übertrittsgates zur Erfassung der Messeintrittskarten vorgesehen sind, umfassend eine mit einem der Messe zugeordneten Server verbundene Leseeinrichtung für die Messeeintrittskarten, wobei durch eine Verbindung des tragbaren Gerätes bzw. des Mobiltelefons mit einem der Messe zugeordneten Server die Information abgerufen werden kann, wann die Messeeintrittskarte zuletzt an welchem Messestand bzw. an welchen Übertrittsgate erfasst worden ist.

12. Verfahren zur Lokalisierung von Personen, nach Anspruch 10 oder 11, **dadurch gekennzeichnet, dass** bei der Lokalisierung von Personen auf einer Messe als personenbezogener RFID-lesbarer Gegenstand ein RFID- bzw. NFC - fähiges tragbares Gerät bzw. Mobiltelefon dient, wobei die Messeeintrittskarte enthaltend eine Seriennummer auf dem tragbaren Gerät bzw. Mobiltelefon in elektronischer Form gespeichert ist und wobei das tragbare Gerät bzw. das Mobiltelefon anhand einer RFID- bzw. NFC - Interaktion mit einer RFID- bzw. NFC-fähigen Meldestelle an einem Messestand bzw. an einem Übertrittsgate erfasst wird.

13. Verfahren zur Lokalisierung von Personen, nach Anspruch 12, **dadurch gekennzeichnet, dass** mittels der RFID- bzw. NFC - Interaktion zwischen dem tragbaren Gerät bzw. Mobiltelefon und der Meldestelle eine Visitenkarte des Benutzers des tragbaren Gerätes bzw. des Mobiltelefons in elektronischer Form an die Meldestelle des Messestandes übermittelt wird.

14. Verfahren zur Lokalisierung von Personen, nach Anspruch 13, **dadurch gekennzeichnet, dass** mittels der RFID- bzw. NFC - Interaktion zwischen dem tragbaren Gerät bzw. Mobiltelefon und der Meldestelle der Benutzer menügesteuert weitere Details angeben, Prospekte anfordern oder einer telefonischen Kontaktaufnahme zustimmen kann.

15. Verfahren zur Lokalisierung von Personen, nach einem der Ansprüche 1 bis 6, **dadurch gekennzeichnet, dass** für den Fall von als personenbezogene Gegenstände dienenden WLAN-fähigen tragbaren Geräten bzw. Mobiltelefonen, die Lokalisierung dadurch erfolgt, dass als Position des Gegenstandes die Position des WLAN - Senders angegeben wird, mit dem das tragbare Gerät bzw. Mobiltelefon zuletzt verbunden war bzw. verbunden ist.

16. Verfahren zur Lokalisierung von Personen, nach einem der Ansprüche 1 bis 6, **dadurch gekennzeichnet, dass** für den Fall von als personenbezogene Gegenstände dienenden WLAN-fähigen tragbaren Geräten bzw. Mobiltelefonen, die Lokalisierung dadurch erfolgt, dass als Position des tragbaren Gerätes bzw. Mobiltelefons die mittels einer Peilung anhand der vom tragbaren Gerät bzw. Mobiltelefon empfangenen Signalstärke von zumindest zwei WLAN - Sendern ermittelte Position angegeben wird, wobei zu diesem Zweck das tragbare Gerät bzw. Mobiltelefon die ermittelte Position mittels einer WLAN-Verbindung an den Server übermittelt.

17. Verfahren zur Lokalisierung von Personen, nach einem der Ansprüche 1 bis 6, **dadurch gekennzeichnet, dass** für den Fall, dass die personenbezogenen Gegenstände tragbare Geräte bzw. Mobiltelefone sind, im Gebiet, in dem die Lokalisierung aktiviert werden soll, auf einem dem Gebiet zugeordneten Server Gruppen gebildet werden, welche die tragbaren Geräte bzw. die Mobiltelefone enthalten, die zu einer Gruppe von Benutzern gehören, wobei zur Bildung einer Gruppe wird mittels eines ersten tragbaren Gerätes bzw. Mobiltelefons oder mittels eines herkömmlichen Computers eine Internetverbindung zum Server des Gebietes, in dem die Lokalisierung aktiviert werden soll hergestellt wird, wobei menügesteuert eine Gruppe definiert wird und die Mitglieder der Gruppe über die Mobiltelefonnummer und/oder eine Seriennummer des Mobiltelefons bzw. des tragbaren Gerätes und/oder der SIM-Karte und/oder eines Sicherheitsspeichers und/oder des Speichermoduls des tragbaren Gerätes bzw. des Mobiltelefons des jeweiligen Mitglieds definiert werden.

18. Verfahren zur Lokalisierung von Personen, nach Anspruch 17, **dadurch gekennzeichnet, dass** die Gruppe einen Namen bzw. eine Nummer und ein Passwort bzw. eine PIN erhält, eine Person der Gruppe nachträglich beitreten kann, indem sie mittels einer Verbindung zum Server den Gruppennamen bzw. die Gruppennummer, ein Passwort bzw. eine PIN sowie die Mobiltelefonnummer und/oder eine Seriennummer des Mobiltelefons bzw. des tragbaren Gerätes und/oder der SIM-Karte und/oder eines Sicherheitsspeichers und/oder des Speichermoduls des tragbaren Gerätes bzw. des Mobiltelefons eingibt.

19. Verfahren zur Lokalisierung von Personen, nach Anspruch 18, **dadurch gekennzeichnet, dass** der Beitritt mittels der Übermittlung einer SMS enthaltend die erforderlichen Daten an den Server erfolgt.

20. Verfahren zur Lokalisierung von Personen, nach einem der Ansprüche 1 bis 6, **dadurch gekennzeichnet, dass** als personenbezogene Gegenstände RFID-Aktivdatenträger dienen, welche anhand einer Seriennummer mit zumindest einem tragbaren Gerät bzw. Mobiltelefon in einem dem Gebiet zugeordneten Server, in dem die Lokalisierung aktiviert werden soll, gepairt werden, wobei die Lokalisierung dadurch erfolgt, dass die Aktivdatenträger von RFID-fähigen Einrichtungen erfasst werden.

21. Verfahren zur Lokalisierung von Personen, nach Anspruch 20, **dadurch gekennzeichnet, dass** der Benutzer des tragbaren Gerätes bzw. Mobiltelefons benachrichtigt wird, wenn die Person, der der Aktivdatenträger zugeordnet ist, das Gebiet, in dem die Lokalisierung erfolgen soll, verlässt oder wenn die Person in ein Gebiet eintritt, wobei die Person beim Verlassen des Gebietes bzw. beim Eintreten in das Gebiet anhand des Aktivdatenträgers erfasst wird.

## Claims

1. A method for localising persons, **characterised in that** a portable device, in particular a mobile phone is associated with at least one person-related machine-readable and/or RFID readable and/or WLAN capable item and/or vice-versa, wherein this association is stored in a server associated with a region, in which server the localisation shall be activated, wherein in order to localise a person associated with a person-related machine-readable and/or RFID readable and/or WLAN capable item, the information where and optionally when, the person-related machine-readable and/or RFID readable and/or WLAN-able item has last been recorded, is retrieved by means of a connection of the portable device or mobile phone with the server, and wherein the person-related item is an admission ticket or a portable device or mobile phone which is RFID or NFC or WLAN capable.

2. The method for the localisation of persons according to claim 1, **characterised in that** the connection from the portable device or mobile phone to the server is effected by means of a mobile phone network, by means of WLAN, Bluetooth® or via another contactless connection technology, wherein in the case of a RFID or NFC capable portable device or mobile phone the connection can be established by activating a link communicated from a RFID or NFC label to the portable device or mobile phone by means of a RFID or NFC interaction.

3. The method for the localisation of persons according to claim 1 or 2, **characterised in that** localisation is additionally effected **in that** the information is displayed on the display by means of an RFID or NFC interaction between the portable device or mobile phone and a RFID or NFC capable device connected with the server, where and optionally when, the person-related machine-readable and/or RFID readable and/or WLAN-able item has last been recorded.

4. The method for the localisation of persons according to claim 1, 2 or 3, **characterised in that** localisation is additionally effected **in that** the person-related machine-readable and/or RFID readable items are recorded at registration offices connected with the server and comprising a reading device for the items, wherein following recording, a notification is optionally sent to the portable device or mobile phone associated with a person-related machine-readable and/or RFID-readable item, which notification contains the information of the location and optionally the time of recording.

5. The method for the localisation of persons according to claim 1, 2, 3 or 4, **characterised in that** the at least one portable device or mobile phone is identified via the mobile phone number and/or the one serial number of the mobile phone or the portable device and/or the SIM card and/or a secure memory and/or the storage module of the portable device or mobile phone, wherein the at least one person-related machine-readable and/or RFID-readable and/or WLAN-capable item is identified by way of at least one number unequivocally associated with this item.

6. The method for the localisation of persons according to one of the preceding claims, **characterised in that** in case that the portable device or mobile phone is associated with several person-related machine-readable and/or RFID-readable and/or WLAN-capable items, the user of the portable device or mobile phone can select, by means of menus, the items desired for localisation.

7. The method for the localisation of persons according to one of the preceding claims, **characterised in that** during localisation of persons in a skiing region the person-related machine-readable and/or RFID-readable items are the ski pass keycards, wherein when paying for the ski pass at the till, the at least one portable device or mobile phone is recorded via the mobile phone number and/or the serial number of the portable device or mobile phone and/or the SIM-card and/or a secure memory and/or the storage module of the portable device or mobile phone, and paired with the serial number of the keycard, wherein the information on when the keycard was last used at which ski lift can be retrieved via a connection of the portable device or mobile phone with the server.

8. The method for the localisation of persons according to one of the preceding claims, **characterised in that** during localisation of persons in a skiing region the person-related machine-readable and/or RFID-readable items are the ski pass keycards, wherein pairing of the portable device or mobile phone with the keycard is achieved **in that** following establishing a connection between the mobile phone and a server associated with the skiing region, the serial number of the at least one keycard is entered manually or by means of a RFID or NFC interaction between the portable device or mobile phone of the user and the RFID or NFC readable keycard, wherein when the connection is active, the mobile phone number or the one serial number of the mobile phone or the portable device and/or the SIM card and/or a secure memory and/or the storage module of the portable device or mobile phone is communicated to the server, wherein the information on when the keycard was last used at which ski lift can be retrieved via a connection of the portable device or mobile phone with the server.

9. The method for the localisation of persons according to one of claims 7 or 8, **characterised in that** during localisation of persons in a skiing region the person-related machine-readable and/or RFID-readable item is a RFID or NFC capable portable device or mobile phone, where the ski pass containing a serial number is stored in electronic form in the portable device or mobile phone and is read by means of a RFID or NFC interaction by the admission control devices in the skiing region.

10. The method for the localisation of persons according to one of preceding claims 1 to 6, **characterised in that** during localisation of persons at a trade show the person-related machine-readable and/or RFID-readable items are admission tickets to the trade show, **in that** during payment of the admission ticket at the till the at least one portable device or mobile phone is recorded via the mobile phone number and/or the one serial number of the mobile phone or the portable device and/or the SIM-card and/or a secure memory and/or the storage module of the portable device or mobile phone and is paired in a server associated with the trade show, wherein the admission tickets to the trade show are recorded at registration offices at the trade show booths or at pass-through gates in the grounds of the trade show, which comprise a reading device connected with a server associated with the trade show for reading the admission ticket, wherein the information on when the admission ticket was last used at which trade show booth can be retrieved via a connection of the portable device or mobile phone with the server.

11. The method for the localisation of persons according to one of preceding claims 1 to 6, **characterised in that** during localisation of persons at a trade show the person-related machine-readable and/or RFID-readable items are the trade show admission tickets, wherein pairing between the portable device or mobile phone and the trade show admission ticket is achieved in that following establishing a connection between the mobile phone and a server associated with the trade show, the serial number of the at least one admission ticket is entered manually or by means of a RFID or NFC interaction between the portable device or the mobile phone of the user and the RFID or NFC readable trade show admission ticket, wherein when the connection is active, the mobile phone number and/or the one serial number of the mobile phone or portable device and/or the SIM card and/or a secure memory and/or the storage device of the portable device or mobile phone is communicated to the server, wherein for recording the trade show admission tickets provision is made for registration offices at the trade show booths and/or at the pass-through gates in the trade show grounds which comprise a reading device for the admission ticket, which is connected with a server associated with the trade show, wherein the information on when the admission ticket was last recorded at which trade show booth or which pass-through gate, is retrieved via connection of the portable device or mobile phone with a server associated with the trade show.

12. The method for the localisation of persons according to claim 10 or 11, **characterised in that** during localisation of persons at a trade show the person-related RFID-readable item is a RFID or NFC capable portable device or mobile phone, wherein the trade show admission ticket containing a serial number on the portable device or mobile phone is stored in electronic form, and wherein the portable device or mobile phone is recorded by means of a RFID or NFC interaction with a RFID or NFC capable registration office at an trade show booth or a pass-through gate.

13. The method for the localisation of persons according to claim 12, **characterised in that** a visiting card of the user of the portable device or mobile phone is communicated in electronic form to the registration office of the trade show by means of the RFID or NFC interaction between the portable device or mobile phone and the registration office.

14. The method for the localisation of persons according to claim 13, **characterised in that** the user can specify, by way of menu, further details, request prospectuses or agree to making contact by telephone via the RFID or NFC interaction between the portable device or mobile phone and the registration office.

15. The method for the localisation of persons according to one of claims 1 to 6, **characterised in that** in case the person-related items are WLAN capable portable devices or mobile phones, vocalisation is carried out in that the position of the WLAN transmitter with which the portable device or mobile phone last was or is connected, is specified as the position of the item.

16. The method for the localisation of persons according to one of claims 1 to 6, **characterised in that** in case the person-related items are WLAN capable portable devices or mobile phones, localisation is carried out in that the signal strength of at least two WLAN transmitters ascertained by means of a bearing using the portable device or mobile phone is specified, wherein to this end the portable device or mobile phone communicates the ascertained position to the server by means of a WLAN connection.

17. The method for the localisation of persons according to one of claims 1 to 6, **characterised in that** in case the person-related items are portable devices or mobile phones, groups are formed on a server associated with the area in which localisation shall be activated, which groups contain the portable devices or mobile phones which belong to a group of users, wherein for forming a group, an internet connection shall be established in the area in which localisation shall be activated by means of a first portable device or mobile phone or by means of a conventional computer, wherein a group is defined by means of menus and the members of the group are defined via the mobile phone number and/or a serial number of the mobile phone or the portable device and/or the SIM card and/or a secure memory and/or the storage module of the portable device or mobile phone of the respective member.

18. The method for the localisation of persons according to claim 17, **characterised in that** the group obtains a name or a number and a password or a PIN, **in that** a person of the group can subsequently join the group **in that** he or she enters, by means of a connection to the server, the group name or the group number, a password or a PIN and the mobile phone number and/or a serial number of the mobile phone or the portable device and/or the SIM card and/or a secure memory and/or the storage module of the portable device or mobile phone.

19. The method for the localisation of persons according to claim 18, **characterised in that** joining the group is effected by sending a short message (SMS) containing the required data to the server.

20. The method for the localisation of persons according to one of claims 1 to 6, **characterised in that** the person-related items are RFID active data carriers, which are paired by means of a serial number with at least one portable device or mobile phone in a server associated with the area in which localisation shall be activated, wherein localisation is effected **in that** the active data carriers are recorded by RFID capable devices.

21. The method for the localisation of persons according to claim 20 **characterised in that**, **characterised in that** the user of the portable device or mobile phone is notified, when the person associated with the active data carrier leaves the area in which localisation shall be effected, or when the person enters an area, wherein the person, when leaving the area or entering the area is recorded by means of the active data carrier.

## Revendications

1. Procédé pour la localisation de personnes, **caractérisé en ce que** l'on associe au moins un appareil portable ou téléphone mobile à au moins un objet se rapportant à une personne lisible par machine et/ou lisible par RFID et/ou à capacité WLAN et/ou vis-versa, cette association étant enregistrée dans un serveur associé à une zone dans laquelle la localisation doit être activée, moyennant quoi pour la localisation d'une personne à laquelle est associée un objet se rapportant à une personne lisible par machine et/ou lisible par RFID et/ou à capacité WLAN, on interroge l'information à l'aide d'une liaison entre l'appareil portable ou téléphone mobile et le serveur pour savoir où, et en option quand l'objet se rapportant à une personne lisible par machine et/ou lisible par RFID et/ou à capacité WLAN a été détecté en dernier et moyennant quoi un ticket d'entrée ou un appareil portable ou téléphone mobile à capacité RFID ou NFC ou à capacité WLAN fait office d'objet se rapportant à une personne.

2. Procédé pour la localisation de personnes selon la revendication 1, **caractérisé en ce que** la liaison entre l'appareil portable ou téléphone mobile et le serveur s'effectue à l'aide d'un réseau de radiocommunications mobiles, à l'aide d'un WLAN, de Bluetooth ® ou via une autre technologie de liaison sans contact, moyennant quoi en cas d'un appareil portable ou téléphone mobile à capacité RFID ou à capacité NFC, la liaison peut être établie par activation d'un lien transmis à l'aide d'une interaction RFID ou NFC d'un label RFID ou NFC à l'appareil portable ou au téléphone mobile.

3. Procédé pour la localisation de personnes selon les revendications 1 ou 2, **caractérisé en ce que** la localisation a lieu de manière additionnelle **en ce que**, à l'aide d'une interaction RFID ou NFC entre l'appareil portable ou le téléphone mobile et un dispositif à capacité RFID ou NFC en liaison avec le serveur, on affiche sur l'afficheur du dispositif l'information quant à où, et en option quand l'objet se rapportant à une personne lisible par machine et/ou lisible par RFID et/ou à capacité WLAN a été détecté en dernier.

4. Procédé pour la localisation de personnes selon les revendications 1, 2 ou 3, **caractérisé en ce que** la localisation a lieu de manière additionnelle **en ce que** les objets se rapportant à une personne lisibles par machine et/ou lisibles par RFID sont détectés au niveau de centrales de signalisation en liaison avec le serveur qui comprennent un dispositif de lecture pour les objets, moyennant quoi après la détection, on transmet en option à l'appareil portable ou téléphone mobile associé à un objet se rapportant à une personne lisible par machine et/ou lisible par RFID un message, lequel contient l'information sur le lieu, et en option sur le moment de la détection.

5. Procédé pour la localisation de personnes selon les revendications 1, 2, 3 ou 4, **caractérisé en ce que** cet au moins un appareil portable ou téléphone mobile est identifié par l'intermédiaire du numéro du téléphone mobile et/ou du numéro de série du téléphone mobile ou de l'appareil portable et/ou de la carte SIM et/ou d'une mémoire de sécurité et/ou du module de mémoire de l'appareil portable ou du téléphone mobile, moyennant quoi cet au moins un objet se rapportant à une personne lisible par machine et/ou lisible par RFID et/ou à capacité WLAN est identifié à l'aide d'un numéro associé de manière univoque à cet objet.

6. Procédé pour la localisation de personnes selon l'une des revendications précédentes, **caractérisé en ce que**, dans le cas où l'on associe à l'appareil portable ou au téléphone mobile plusieurs objets se rapportant à une personne lisibles par machine et/ou lisibles par RFID et/ou à capacité WLAN, l'utilisateur de l'appareil portable ou du téléphone mobile peut sélectionner de manière commandée par menu les objets dont la localisation est souhaitée.

7. Procédé pour la localisation de personnes selon l'une des revendications précédentes, **caractérisé en ce que**, lors de la localisation de personnes dans un domaine skiable, on utilise en guise d'objets se rapportant à une personne lisibles par machine et/ou lisibles par RFID les cartes clef de forfaits de ski, moyennant quoi lors du règlement de la carte clef à la caisse, on détecte cet au moins un appareil portable ou téléphone mobile via le numéro de téléphone mobile et/ou le numéro de série du téléphone mobile ou de l'appareil portable et/ou de la carte SIM et/ou d'une mémoire de sécurité et/ou du module de mémoire de l'appareil portable ou du téléphone mobile et on l'apparie, dans un serveur associé au domaine skiable, au numéro de série de la carte clef, moyennant quoi grâce à une liaison entre l'appareil portable ou téléphone mobile et le serveur, on peut consulter l'information pour savoir quand la carte clef a été utilisée en dernier au niveau de quel remonte-pente.

8. Procédé pour la localisation de personnes selon l'une des revendications 1 à 6 précédentes, **caractérisé en ce que**, lors de la localisation de personnes dans un domaine skiable on utilise, en guise d'objets se rapportant à une personne lisibles par machine et/ou lisibles par RFID, les cartes clef de forfaits de ski, moyennant quoi l'appariement entre l'appareil portable ou le téléphone mobile et la carte clef est obtenu **en ce qu'**après l'établissement d'une liaison entre le téléphone mobile et un serveur associé au domaine skiable, on saisit le numéro de série de cette au moins une carte clef de manière manuelle ou à l'aide d'une interaction RFID ou NFC entre l'appareil portable ou téléphone mobile de l'utilisateur et la carte clef lisible par RFID ou NFC, moyennant quoi, en cas de liaison active, on transmet au serveur le numéro de téléphone mobile et/ou le numéro de série du téléphone mobile ou de l'appareil portable et/ou de la carte SIM et/ou d'une mémoire de sécurité et/ou du module de mémoire de l'appareil portable ou du téléphone mobile, moyennant quoi grâce à une liaison entre l'appareil portable ou téléphone mobile et le serveur, il est possible de consulter l'information pour savoir quand la carte clef a été utilisée en dernier au niveau de quel remonte-pente.

9. Procédé pour la localisation de personnes selon l'une des revendications 7 ou 8 précédentes, **caractérisé en ce que**, lors de la localisation de personnes dans un domine skiable, un appareil portable ou téléphone mobile à capacité RFID ou NFC fait office d'objet se rapportant à une personne lisible par RFID, le forfait de ski contenant un numéro de série étant enregistré sous forme électronique dans l'appareil portable ou le téléphone mobile et étant lu à l'aide d'une interaction RFID ou NFC par les dispositifs de contrôle d'accès dans le domaine skiable.

10. Procédé pour la localisation de personnes selon l'une des revendications 1 à 6, **caractérisé en ce que**, lors de la localisation de personnes sur un salon, les tickets d'entrée au salon servent d'objets se rapportant à une personne lisibles par machine et/ou lisibles par RFID, moyennant quoi lors du paiement du ticket d'entrée au salon à la caisse, cet au moins un appareil portable ou téléphone mobile est détecté par l'intermédiaire du numéro de téléphone mobile et/ou du numéro de série du téléphone mobile ou de l'appareil portable et/ou de la carte SIM et/ou d'une mémoire de sécurité et/ou du module de mémoire de l'appareil portable ou du téléphone mobile, et est apparié dans un serveur associé au salon au numéro de série du ticket d'entrée au salon, des centrales de signalisation étant prévues sur des stands du salon et/ou des portiques de passage sur le parc d'exposition pour la détection des tickets d'entrée au salon, lesquels comprennent un dispositif de lecture en liaison avec le serveur associé au salon pour les tickets d'entrée au salon, moyennant quoi grâce à une liaison entre l'appareil portable ou le téléphone mobile et le serveur, on peut consulter l'information pour savoir quand le ticket d'entrée au salon a été détecté en dernier sur quel stand du salon.

11. Procédé pour localiser des personnes selon les revendications 1 à 6 précédentes, **caractérisé en ce que**, lors de la localisation de personnes sur un salon, les tickets d'entrée au salon servent d'objets se rapportant à une personne lisibles par machine et/ou lisibles par RFID, l'appariement entre l'appareil portable ou téléphone mobile et le ticket d'entrée au salon étant réalisé **en ce qu'**après l'établissement d'une liaison entre le téléphone mobile et un serveur associé au salon, on saisit le numéro de série de cette au moins une carte clef de manière manuelle ou à l'aide d'une interaction RFID ou NFC entre l'appareil portable ou téléphone mobile de l'utilisateur et le ticket d'entrée au salon lisible par RFID ou NFC, moyennant quoi en cas de liaison active, on transmet au serveur le numéro de téléphone mobile et/ou le numéro de série du téléphone mobile ou de l'appareil portable et/ou de la carte SIM et/ou d'une mémoire de sécurité et/ou du module de mémoire de l'appareil portable ou du téléphone mobile, moyennant quoi on prévoit des centrales de signalisation sur des stands du salon et/ou des portiques de passage sur le parc d'exposition pour la détection des tickets d'entrée au salon, lesquels comprennent un dispositif de lecture en liaison avec un serveur associé au salon pour les tickets d'entrée au salon, moyennant quoi grâce à une liaison entre l'appareil portable ou téléphone mobile et un serveur associé au salon, on peut interroger l'information pour savoir quand le ticket d'entrée au salon a été détecté en dernier sur quel stand du salon ou à quel portique de passage.

12. Procédé pour la localisation de personnes selon les revendications 10 ou 11, **caractérisé en ce que**, lors de la localisation de personnes sur un salon, un appareil portable ou téléphone mobile à capacité RFID ou NFC sert d'objet se rapportant à une personne lisible par RFID, le ticket d'entrée au salon contenant un numéro de série étant enregistré sous forme électronique dans l'appareil portable ou le téléphone mobile, et l'appareil portable ou le téléphone mobile étant détecté à l'aide d'une interaction RFID ou NFC avec une centrale de signalisation à capacité RFID ou NFC sur un stand du salon ou à un portique de passage.

13. Procédé pour la localisation de personnes selon la revendication 12, **caractérisé en ce que** l'on transmet, à l'aide de l'interaction RFID ou NFC entre l'appareil portable ou téléphone mobile et la centrale de signalisation, une carte de visite de l'utilisateur de l'appareil portable ou du téléphone mobile, sous forme électronique, à l'attention de la centrale de signalisation du stand du salon.

14. Procédé pour la localisation de personnes selon la revendication 13, **caractérisé en ce qu'**à l'aide de l'interaction RFID ou NFC entre l'appareil portable ou téléphone mobile et la centrale de signalisation, l'utilisateur peut, de manière commandée par menu, indiquer d'autres détails, demander des prospectus ou donner son accord à une prise de contact par téléphone.

15. Procédé pour la localisation de personnes selon l'une des revendications 1 à 6, **caractérisé en ce que**, dans le cas d'appareils portables ou téléphones mobiles à capacité WLAN servant d'objets se rapportant à une personne, la localisation s'effectue **en ce que** l'on indique, en tant que position de l'objet, la position de l'émetteur WLAN avec lequel l'appareil portable ou le téléphone mobile était en liaison en dernier ou est en liaison avec.

16. Procédé pour la localisation de personnes selon l'une des revendications 1 à 6, **caractérisé en ce que**, dans le cas d'appareils portables ou téléphones mobiles à capacité WLAN servant d'objets se rapportant à une personne, la localisation s'effectue **en ce que** l'on indique, en guise de position de l'appareil portable ou du téléphone mobile, la position déterminée grâce à un repérage à l'aide de l'intensité du signal réceptionné par l'appareil portable ou le téléphone mobile d'au moins deux émetteurs WLAN, moyennant quoi l'appareil portable ou le téléphone mobile transmet à cet effet au serveur la position déterminée à l'aide d'une liaison WLAN.

17. Procédé pour la localisation de personnes selon l'une des revendications 1 à 6, **caractérisé en ce que**, dans le cas où les objets se rapportant à une personne sont des appareils portables ou des téléphones mobiles, on forme, dans la zone dans laquelle la localisation doit être activée, des groupes sur un serveur associé à la zone lesquels contiennent les appareils portables ou téléphones mobiles appartenant à un groupe d'utilisateurs, moyennant quoi on établit, pour la formation d'un groupe, à l'aide d'un premier appareil portable ou téléphone mobile ou à l'aide d'un ordinateur classique, une connexion Internet avec le serveur de la zone dans laquelle la localisation doit être activée, un groupe étant défini de manière commandée par menu et les membres du groupe étant définis par l'intermédiaire du numéro de téléphone mobile et/ou d'un numéro de série du téléphone mobile ou de l'appareil portable et/ou de la carte SIM et/ou d'une mémoire de sécurité et/ou du module de mémoire de l'appareil portable ou du téléphone mobile du membre respectif.

18. Procédé pour la localisation de personnes selon la revendication 17, **caractérisé en ce que** le groupe obtient un nom ou un numéro et un mot de passe ou un PIN, une personne du groupe pouvant adhérer par la suite en saisissant, à l'aide d'une liaison avec le serveur, le nom du groupe ou le numéro du groupe, un mot de passe ou un PIN ainsi que le numéro de téléphone mobile et/ou un numéro de série du téléphone mobile ou de l'appareil portable et/ou de la carte SIM et/ou d'une mémoire de sécurité et/ou du module de mémoire de l'appareil portable ou du téléphone mobile.

19. Procédé pour la localisation de personnes selon la revendication 18, **caractérisé en ce que** l'adhésion s'effectue à l'aide de la transmission au serveur d'un SMS contenant les données nécessaires.

20. Procédé pour la localisation de personnes selon l'une des revendications 1 à 6, **caractérisé en ce que** des supports de données actives RFID servent d'objets se rapportant à une personne, lesquels doivent être appariés à l'aide d'un numéro de série à au moins un appareil portable ou téléphone mobile dans un serveur associé à la zone dans laquelle la localisation doit être activée, moyennant quoi la localisation s'effectue **en ce que** les supports de données actives sont détectés par des dispositifs à capacité RFID.

21. Procédé pour la localisation de personnes selon la revendication 20, **caractérisé en ce que** l'utilisateur de l'appareil portable ou du téléphone mobile est averti lorsque la personne à laquelle le support de données actives est associé quitte la zone dans laquelle la localisation doit être effectuée ou bien lorsque la personne rentre dans une zone, la personne étant détectée en quittant la zone ou en entrant dans la zone à l'aide du support de données actives.
